# EUROPEAN PATENT SPECIFICATION

(11) **EP 1 544 063 B1**
(45) Date of publication and mention of the grant of the patent: **07.02.2007**
(21) Application number: 04029594.1
(22) Date of filing: 14.12.2004
(51) Int. Cl.: B60R 25/00, G07C 9/00

(54) **Passive keyless entry device**
Passive, schlüssellose Zugangsvorrichtung
Dispositif passif d'accès sans clef

(30) Priority: 15.12.2003 JP 2003416808
(43) Date of publication of application: 22.06.2005
(73) Proprietor: ALPS ELECTRIC CO., LTD., Tokyo 145-8501 (JP)
(72) Inventor: Masudaya, Hideki, Ota-ku Tokyo 145-8501 (JP)
(74) Representative: Klunker . Schmitt-Nilson . Hirsch

(56) References cited:
- EP-A- 0 524 424
- EP-A- 1 041 224

## Description

### BACKGROUND OF THE INVENTION

### 1. Field of the Invention

The present invention relates to a passive keyless entry device including a vehicle-mounted transceiver and a portable transceiver, and more particularly, to a passive keyless entry device for controlling such that a level of a transmitting signal from the vehicle-mounted transceiver is reduced if a level of a receiving signal of the portable transceiver exceeds an input tolerance limit of a signal detector when the portable transceiver receives the transmitting signal from the vehicle-mounted transceiver.

### 2. Description of the Related Art

In recent years, for a mobile vehicle such as a car, there have been many cases where a passive keyless entry device is mounted on the mobile vehicle in order to prevent the mobile vehicle from being stolen or broken while the mobile vehicle is not driven. Such a passive keyless entry device includes a vehicle-mounted transceiver mounted on the mobile vehicle, and at least one portable transceiver carried by a driver of the mobile vehicle. When a driver drives his own mobile vehicle, he cannot open/close a door of the mobile vehicle if he does not carry a portable transceiver, which is registered in his own mobile vehicle.

In operation of the passive keyless entry device, when the driver or an authorized person carrying the portable transceiver registered in the mobile vehicle approaches the mobile vehicle, the portable transceiver receives a low frequency radio signal including a wakeup signal transmitted from the vehicle-mounted transceiver. Then, the portable transceiver transmits a high frequency radio signal including a command signal to the vehicle-mounted vehicle in response to the low frequency radio signal. When the vehicle-mounted transceiver receives the transmitted high frequency radio signal, it performs a control according to the command signal included in the high frequency radio signal such that the driver opens the door of the mobile vehicle to drive the mobile vehicle. Such a conventional passive keyless entry device is disclosed in Japanese Patent Laid-Open No. 2000-320212.

In the above-mentioned passive keyless entry device, when the low frequency radio signal including the wakeup signal is transmitted from the vehicle-mounted transceiver to the portable transceiver, a level of the low frequency radio signal transmitted from the vehicle-mounted transceiver and received in the portable transceiver is greatly varied depending on a distance relationship between a position of a person carrying the portable transceiver and a position of the mobile vehicle mounting the vehicle-mounted transceiver. More specifically, the level of the signal received in the portable transceiver is not very so high if the portable transceiver and the vehicle-mounted transceiver are apart from each other with an appropriate distance therbetween. However, if the portable transceiver approaches the vehicle-mounted transceiver, the level of the signal received in the portable transceiver becomes significantly high. This may lead to damage of a signal detector of the portable transceiver when a high level of signal exceeding a tolerance limit of the signal detector is inputted to the signal detector.

In order to avoid such damage of the signal detector, it can be contemplated that the passive keyless entry device has a protection circuit composed of a Zener diode between a receiving antenna and a signal receiving unit of the portable transceiver for reducing a high level receiving signal to be less than the tolerance limit of the signal detector for prevention of damage of the signal detector due to an input signal having a high level above the tolerance limit, i.e., the high level receiving signal. However, there is a problem in that the receiving signal cannot be completely demodulated into a transmitting signal before modulation because a peak portion of the high level receiving signal input to the signal detector is obstructed and deformed by the protection circuit, or although the receiving signal is an ideally rectangular ASK (Amplitude Shift Keying)-modulated low frequency signal, the signal detector cannot detect the high level receiving signal normally because an attenuation signal is added to the high level receiving signal by a time constant of an LC antenna and hence a width of an envelopment of the high level receiving signal is changed to be different from that of an envelopment of the transmitting signal.

For this reason, for example, there is a case where an instruction for a vehicle is modified depending on whether the portable transceiver is inside or outside the vehicle. This case has a problem in that it is required to precisely discern a signal input to the portable transceiver within the vehicle, however, it cannot be determined whether or not the portable transceiver is a regular one since the strength of the signal inputted to the portable transceiver is large.

In addition, there is a case where the vehicle is automatically locked if a regular ID of the portable transceiver is not detected. This case has a problem in that the vehicle may be locked if a strong signal is received in the portable transceiver before a driver rides in the vehicle and accordingly if it cannot be detected that the portable transceiver is a regular one. In addition, the same problem is true of a case where a lock is not released until a receiving signal is detected in the portable transceiver several times. Furthermore, the same problem is also true of a case where, if the vehicle parks in the vicinity of an electromagnetic shielding obstacle, a driver gets out of the shade of the obstacle and immediately rides in the vehicle.

In the meantime, there is a keyless entry device known in respect that the vehicle-mounted transceiver processes the transmitting signal and the portable transceiver can obtain an appropriate level of receiving signal, which is disclosed in Japanese Patent No. 3003668 and Japanese Unexamined Patent Application No. 2002-316616, for example.

The keyless entry device disclosed in Japanese Patent No. 3003668 has a transmitting signal level adjustment and setting means provided at the vehicle-mounted transceiver side, which detects a variation of the state of environment around the portable transceiver, for example, a difference between the daytime during which it is light and the nighttime during which it is dark or a difference between a moment at which it is fine and a moment at which it rains, and then adjusts and sets a level of a transmitting signal based on a result of the detection.

In addition, the keyless entry device disclosed in Japanese Unexamined Patent Application No. 2002-316616 has a transmitting signal level adjustment and setting means provided at the vehicle-mounted transceiver, which adjusts and sets a level of a transmitting signal according to a need to adjust a detection distance of the transmitting signal transmitted from the vehicle-mounted transceiver to the portable transceiver when the keyless entry device comes into the market or when the keyless entry device, with the vehicle-mounted transceiver mounted on the vehicle, is used.

Both of the keyless entry devices disclosed in Japanese Patent No. 3003668 and Japanese Unexamined Patent Application No. 2002-316616 perform the adjustment of the level of the transmitting signal in order to alter an arrival distance of the transmitting signal from the vehicle-mounted transceiver and set the level of the transmitting signal as one level corresponding to a prescribed arrival distance of the transmitting signal. However, these keyless entry devices cannot discern the transmitting signal when a high level of signal is added to a normal level of the transmitting signal. More specifically, when a level of signal so high that it cannot be determined whether or not a signal received in the portable transceiver is one transmitted from a regular vehicle-mounted transceiver is input to the portable transceiver, there is a problem in that the portable transceiver does not show any behavior related to the receipt of the transmitting signal and hence there is no measure to be taken for the portable transceiver.

### SUMMARY OF THE INVENTION

In light of the above-described technical background, it is a main object of the present invention to provide a passive keyless entry device, which is capable of discerning a regular portable transceiver even when a distance between a vehicle-mounted transceiver and a portable transceiver is varied.

It is another object of the present invention to provide a passive keyless entry device, which is capable of reducing a battery power of a portable transceiver simultaneously.

In order to achieve the above objects, there is provided a passive keyless entry device comprising a vehicle-mounted transceiver and a portable transceiver, which is adapted to operate vehicle-mounted devices controlled by the vehicle-mounted transceiver, the vehicle-mounted transceiver transmitting a wakeup signal to the portable transceiver, the portable transceiver transmitting a command signal to control the vehicle-mounted devices in response to receipt of the wakeup signal, wherein the portable transceiver comprises a receiving antenna for receiving the wakeup signal, a signal receiver including a signal detector for processing a signal received from the receiving antenna, a signal level discriminator for determining whether a level of the signal received from the receiving antenna exceeds an input tolerance limit of the signal detector, a controller for controlling processing of various signals, and a signal transmitter for transmitting a signal to the vehicle-mounted transceiver, the controller transmits a request signal to the vehicle-mounted transceiver via the signal transmitter when the signal level discriminator determines that the level of the signal received from the receiving antenna exceeds the input tolerance limit of the signal detector, and the vehicle-mounted transceiver again transmits the wakeup signal to the portable transceiver, with a signal level lowered by a certain level, upon receiving the request signal.

Preferably, the portable transceiver includes a level protection circuit connected between the receiving antenna and the signal receiver for limiting the level of the received signal supplied to the signal detector such that the level of the received signal does not exceed the input tolerance limit of the signal detector, and, when the level protection circuit limits the level of the received signal, a result of a determination that the level of the received signal exceeds the input tolerance limit of the signal detector is output from the signal level discriminator to the controller.

Preferably, the portable transceiver includes a counter for counting a duration for which the result of the determination that the level of the received signal exceeds the input tolerance limit of the signal detector is output from the signal level discriminator to the controller, and the transmission of the request signal is stopped when a counting value of the counter exceeds a predetermined value. In this case, the transmission stop of the request signal is performed by a latch circuit for stopping supply of power to the controller when the counting value of the counter exceeds the predetermined value.

According to the passive keyless entry device of a first aspect, since the controller of the portable transceiver transmits the request signal to the vehicle-mounted transceiver via the signal transmitter when the signal level discriminator determines that the level of the signal received from the receiving antenna exceeds the input tolerance limit of the signal detector, and the vehicle-mounted transceiver again transmits the wakeup signal to the portable transceiver, with a signal level lowered by a certain level, upon receiving the request signal, an undesired situation where a regular signal cannot be recognized can be avoided.

According to the passive keyless entry device of a second aspect, since the portable transceiver includes a level protection circuit connected at the input side of the signal receiver for limiting the level of the received signal supplied to the signal detector such that the level of the received signal does not exceed the input tolerance limit of the signal detector, and, when the level protection circuit limits the level of the received signal, a result of a determination that the level of the received signal exceeds the input tolerance limit of the signal detector is output from the signal level discriminator to the controller, the received signal exceeding the input tolerance limit of the signal detector of the portable transceiver cannot be input to the signal detector of the portable transceiver due to the level protection circuit. Accordingly, there is an advantage in that the signal detector is not broken even when the received signal of high level is input thereto, and moreover, since the result of the determination from the signal level discriminator can be supplied to the controller, such an advantage can be more reliably accomplished.

According to the passive keyless entry device of a third aspect, since the counter counts the duration for which the result of the determination that the level of the received signal exceeds the input tolerance limit of the signal detector is output from the signal level discriminator to the controller, and the transmission of the request signal is stopped when the counting value of the counter exceeds the predetermined value, even when signals with high level such as extraneous noise continue to be received and the result of the determination that the level of the received signal exceeds the input tolerance limit of the signal detector is output from the signal level discriminator, an undesired situation where the controller of the portable transceiver repeatedly transmits the request signal to the vehicle-mounted transceiver can be avoided, thereby reducing the power consumption of the portable transceiver.

### BRIEF DESCRIPTION OF THE DRAWINGS

Fig. 1 is a block diagram illustrating a main configuration of a portable transceiver in a passive keyless entry device according to an embodiment of the present invention;
Fig. 2 is a block diagram illustrating a main configuration of a vehicle-mounted transceiver in a passive keyless entry device according to an embodiment of the present invention; and
Fig. 3 is a block diagram illustrating a main configuration of a portable transceiver in a passive keyless entry device according to another embodiment of the present invention.

### DESCRIPTION OF THE PREFERRED EMBODIMENT

Preferred embodiments of the present invention will now be described with reference to the accompanying drawings.

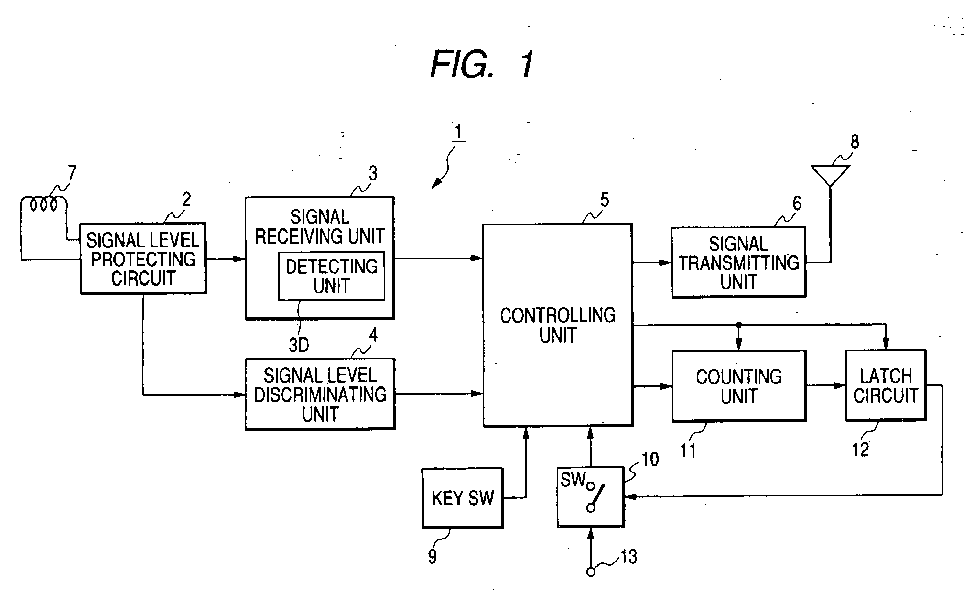

Fig. 1 is a block diagram illustrating a main configuration of a portable transceiver in a passive keyless entry device according to an embodiment of the present invention.

Referring to Fig. 1, a portable transceiver 1 according to this embodiment comprises a signal level protection circuit 2, a signal receiver 3 containing a signal detector 3D, a signal level discriminator 4, a controller 5, a signal transmitter 6, a receiving antenna 7, a transmitting antenna 8, a button operator (key SW) 9, a controllable power switch (SW) 10, a counter 11, a latch circuit 12, and a power terminal 13.

The signal level protection circuit 2 is composed of a Zener diode and a detection resistor connected in series between a signal input terminal or a signal output terminal and a reference potential point (ground point). When a level of a receiving signal, such as a wakeup signal, received in the receiving antenna 7 exceeds an input tolerance limit of the signal detector 3D, which will be described later, an amount of excess is limited by the Zener diode. The signal input terminal, the signal output terminal, and a detection terminal drawn from both ends of the detection resistor are connected to the receiving antenna 7, a signal input terminal of the signal receiver 3, and an input terminal of the signal level discriminator 4, respectively. The signal receiver 3 containing the signal detector 3D detects the receiving signal using the signal detector 3D and outputs the detected signal and has a detection signal output terminal connected to the controller 5. The signal level discriminator 4 outputs a detection voltage, which is supplied to its signal input terminal, as a discrimination signal and has its output terminal connected to the controller 5.

In addition, the signal transmitter 6 transmits a transmitting signal such as a request signal generated in the controller 5 as a frequency-modulated high frequency signal and has its signal input terminal connected to the controller 5 and its signal output terminal connected to the transmitting antenna 8. The button operator 9 is composed of a plurality of operation buttons, which are operable by keys, for achieving various controls through operation of the buttons and has its control output terminal connected to the controller 5. The controllable power switch 10 switches on/off an operation power to the controller 5 and has one end connected to the power terminal 13, the other end connected to a power line (not shown) of the controller 5, and its control terminal connected to an output terminal of the latch circuit 12. The counter 11 counts the duration of a result of a determination that the receiving signal supplied from the controller 5 exceeds the input tolerance limit of the signal detector, and has its input terminal and its reset terminal connected to the controller 5 and its output terminal connected to a control terminal of the latch circuit 12. The latch circuit 12 performs a latch operation when a counting value of the counter 11 exceeds a constant value and has its reset terminal connected to the controller 5.

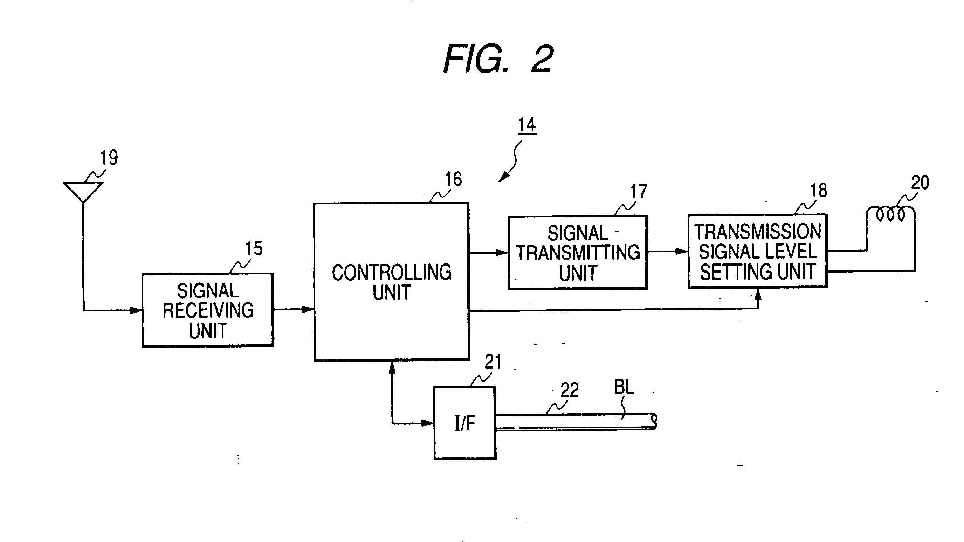

Fig. 2 is a block diagram illustrating a main configuration of a vehicle-mounted transceiver in a passive keyless entry device according to an embodiment of the present invention.

Referring to Fig. 2, a vehicle-mounted transceiver 14 according to this embodiment is composed of a signal receiver 15, a controller 16, a signal transmitter 17, a transmitting signal level setting unit 18, a receiving antenna 19, a transmitting antenna 20, an interface (I/F) 21, and a bus line (BL) 22.

In addition, the signal receiver 15 receives and processes a high frequency signal such as a request signal transmitted from the portable transceiver 1 and has its signal input terminal connected to the receiving antenna 19 and its signal output terminal connected to the controller 16. The signal transceiver 17 transmits a low frequency transmitting signal such as a wakeup signal to the portable transceiver 1 and has its signal input terminal connected to the controller 16 and its signal output terminal connected to a signal input terminal of the transmitting signal level setting unit 18. The transmitting signal level setting unit 18 sets a level of the transmitting signal transmitted from the transmitting antenna 20 under the control of the controller 16 and has its signal output terminal connected to the transmitting antenna 20 and its control terminal connected to the controller 16. The interface 21 interfaces the controller 16 with the bus line 22 and has its input terminal connected to the controller 16 and its output terminal connected to the bus line 22. The bus line 22 is set up inside the vehicle and transmits and supplies control signals from the controller 16 to each member to be controlled.

Hereinafter, operation of the passive keyless entry device according to the embodiment having the configuration as described above will be described with reference to Figs. 1 and 2.

Through the controller 16, the vehicle-mounted transceiver 14 periodically generates a low frequency signal including a wakeup signal and an ID of the portable transceiver 1, supplies the generated low frequency signal to the transmitting antenna 20 via the signal transmitter 17 and the transmitting signal level setting unit 18, and intermittently transmits the generated low frequency signal as a low frequency radio signal from the transmitting antenna 20 out of the vehicle. At this time, the transmitting signal level setting unit 18 is set to a standard level state so as to have a prescribed transmitting signal arrival distance, and the level of the low frequency radio signal transmitted from the transmitting antenna 20 is also transmitted in the standard level state. In such a standard level state, if the portable transceiver 1 carried by the driver is far apart from the vehicle, since the portable transceiver 1 cannot normally receive the low frequency radio signal transmitted from the vehicle-mounted transceiver 14, the portable transceiver 1 takes no action. On the contrary, when the driver carrying the portable transceiver 1 approaches the vehicle to drive the vehicle, the portable transceiver 1 can normally receive the low frequency radio signal and take an action as described below.

When the receiving antenna 7 receives the low frequency radio signal transmitted from the vehicle-mounted transceiver 14, the portable transceiver 1 supplies the received signal to the signal level protection circuit 2. At this time, since the level of the received signal supplied to the signal level protection circuit 2 is set to be below the input tolerance limit of the signal detector 3D, the signal level protection circuit 2 is not operated and the received signal passes through the signal level protection circuit 2 with little loss and then is supplied to the signal receiver 3. The signal receiver 3 performs a prescribed signal process for the received signal supplied thereto, and simultaneously, reproduces the wakeup signal and the ID included in the received signal through a detecting operation of the signal detector 3D and supplies the reproduced wakeup signal and ID to the controller 5. In response to the wakeup signal when the wakeup signal is supplied to the controller 5, the controller 5 generates a high frequency signal including a command signal and an ID of the vehicle-mounted transceiver 14 and supplies the generated high frequency signal to the transmitting antenna 8 via the signal transmitter 6. The transmitting antenna 8 transmits the high frequency signal supplied thereto as a high frequency radio signal.

At this time, when the receiving antenna 19 receives the high frequency radio signal transmitted from the portable transceiver 1, the vehicle-mounted transceiver 14 supplies the received signal to the signal receiver 15. The signal receiver 15 reproduces the command signal and ID from the received signal and supplies the reproduced command signal and ID to the controller 16. If the supplied ID is a regular one and the supplied command signal is a prescribed one, the controller 16 generates a control signal corresponding to a command content of the command signal, transmits the generated control signal to a certain member to be controlled via the interface 21 and the bus line 22, and controls the member to be controlled.

On the other hand, when the driver carrying the portable transceiver 1 approaches the vehicle to drive the vehicle and accordingly the portable transceiver 1 is very close to the vehicle, the receiving antenna 7 of the portable transceiver 1 receives the low frequency radio signal having a large electromagnetic field strength from the vehicle-mounted transceiver 14, that is, the low frequency radio signal received in the receiving antenna 7 is a high level of signal. Then, when the received signal is supplied to the signal level protection circuit 2, the level of the received signal exceeds the input tolerance limit of the signal detector 3D, thereby operating the signal level protection circuit 2. At this time, in the signal level protection circuit 2, the Zener diode is conducted to flow current through the detection resistor and accordingly a detection voltage is generated at a detection terminal connected to both ends of the detection resistor. Accordingly, when the received signal passes through the operated signal level protection circuit 2, the level of the received signal is lowered by cutting by the amount of excess over the input tolerance limit of the signal detector 3D. The received signal with the lowered level is supplied to the signal receiver 3 and then demodulated in the signal detector 3D, and the detection voltage generated at the detection terminal is supplied to the signal level discriminator 4. Namely, the signal receiver 3 is input with the received signal having a waveform cut by the amount of excess over the input tolerance limit of the signal detection 3D.

When the signal level discriminator 4 is supplied with the detection voltage of a value, which is larger than an internal threshold value, it generates a discrimination signal with a polarity indicating that the signal level protection circuit 2 is operated, and supplies the generated discrimination signal to the controller 5. In response to the discrimination signal supplied to the controller 5, regardless of an ID included in the discrimination signal, the controller 5 generates a high frequency signal including a request signal and an ID of the vehicle-mounted transceiver 14, which is to be supplied to the vehicle-mounted transceiver 14, and supplies the generated high frequency signal to the signal transmitter 6. The signal transmitter 6 amplifies the supplied high frequency signal until the high frequency signal has a level appropriate for transmission and transmits the amplified high frequency signal through the transmitting antenna 8 as the high frequency radio signal. Also, when the controller 5 is supplied with the discrimination signal, since there is a possibility that the received signal is a wrong signal although it is determinable by being supplied to the signal receiver 3, it is preferable not to perform a signal process in the signal receiver 3.

When the receiving antenna 19 receives the high frequency radio signal transmitted from the portable transceiver 1, the vehicle-mounted transceiver 14 supplies the received signal to the signal receiver 15. The signal receiver 15 reproduces the request signal and ID from the received signal and supplies the reproduced request signal and ID to the controller 16. If the ID supplied to the controller 16 is a regular one and the request signal supplied to the controller 16 is a prescribed one, in response to the request signal, the controller 16 again generates a low frequency signal including the wakeup signal and the ID of the portable transceiver 1 and supplies the generated low frequency signal to the signal transmitter 17. Simultaneously, the controller 16 generates a level control signal for lowering a transmission level of the low frequency radio signal by a certain level to be less than a specified level and supplies the generated level control signal to the transmitting signal level setting unit 18. Accordingly, the transmitting signal level setting unit 18 sets the level of the low frequency signal including the wakeup signal and the ID of the portable transceiver 1, which is supplied from the controller 16 through the signal transmitter 17, as a signal level, which is lower by the certain level than the specified level, and transmits the low frequency signal with the set signal level as a low frequency radio signal with a low level via the transmitting antenna 20.

The portable transceiver 1 receives at the receiving antenna 7 the low frequency radio signal with the low level transmitted from the vehicle-mounted transceiver 14 and supplies the received signal to the signal level protection circuit 2. At this time, since the level of the received signal supplied to the signal level protection circuit 2 has a low level below the input tolerance limit of the signal detector 3D, the signal level protection circuit 2 is not operated and the received signal passes through the signal level protection circuit 2 with little loss and then is supplied to the signal receiver 3. Subsequent operations are the same as those described above. That is, the signal receiver 3 performs a prescribed signal process for the received signal supplied thereto, and simultaneously, reproduces the wakeup signal and the ID included in the received signal through a detecting operation of the signal detector 3D and supplies the reproduced wakeup signal and ID to the controller 5. In response to the wakeup signal, the controller 5 generates a high frequency signal including a command signal and an ID of the vehicle-mounted transceiver 14 and supplies the generated high frequency signal to the transmitting antenna 8 via the signal transmitter 6. The transmitting antenna 8 transmits the high frequency signal supplied thereto as a high frequency radio signal.

Although the configuration where the signal level protection circuit 2 is composed of the Zener diode and the detection resistor connected in series has been exemplified in this embodiment, the signal level protection circuit 2 used in the present invention is not limited to a circuit having such a configuration, but it should be understood that other circuits having other configurations similar to this configuration may be employed in the present invention.

In this way, even if the received signal received in the receiving antenna 7 of the portable transceiver 1 is a high level low frequency radio signal having large electromagnetic field strength, the portable transceiver 1 transmits the request signal to the vehicle-mounted transceiver 14 at once and lowers a transmitting level of the low frequency radio signal transmitted from the vehicle-mounted transceiver 14 to a level in a normal state. Accordingly, even when the portable transceiver 1 is quite close to the vehicle-mounted transceiver 14, the electromagnetic field strength of the low frequency radio signal received in the portable transceiver 1 becomes a normal value below the input tolerance limit of the signal detector 3D and the signal level protection circuit 2 is not operated.

On the other hand, if there are electric devices producing strong noise signals in the vicinity of the portable transceiver 1 and the strong noise signals emitted when the electric devices are operated are received in the receiving antenna 7 of the portable transceiver 1, the signal level protection circuit 2 is operated by the received strong noise signals and the signal level discriminator 4 supplies a discrimination signal to the controller 5. In response to the supplied discrimination signal, the controller 5 transmits a high frequency radio signal including a request signal to the vehicle-mounted transceiver 14. Upon receiving the request signal, the vehicle-mounted transceiver 14 lowers a level of the low frequency radio signal to be transmitted from the vehicle-mounted transceiver 14 in response to the request signal and transmits the low frequency radio sign with the lowered level.

Even if the level of the low frequency radio signal received in the portable transceiver 1 is lowered or the vehicle-mounted transceiver 14 is not close to the portable transceiver 1, when the strong noise signals continue to be produced from the electric devices in the vicinity of the portable transceiver 1, the signal level protection circuit 2 continues to be operated due to the received strong noise signals and the signal level discriminator 4 continues to supply the discrimination signal to the controller 5. Accordingly, the controller 5 repeatedly transmits the high frequency radio signal including the request signal to the vehicle-mounted transceiver 14. However, when the portable transceiver 1 repeatedly transmits the high frequency radio signal including the request signal, consumption of a power supply contained in the portable transceiver 1 increase to thus shorten the lifetime of the power supply.

In order to reduce the consumption of the power supply contained in the portable transceiver 1, the portable transceiver 1 according to this embodiment includes the counter 11 and the latch circuit 12 for controlling the number of times of repeated transmission of the high frequency radio signal including the request signal. When the discrimination signal is supplied from the signal level discriminator 4 to the controller 5, the controller 5 causes the counter 11 to start to count time. A counting value is sequentially added while the discrimination signal is supplied. The counting value counted and added in the counter 11 is supplied to the latch circuit 12. When the counting value supplied to the latch circuit 12 reaches a predetermined value, the latch circuit 12 goes into a latch state and switches off the controllable power switch 10 maintaining a switch on state up to that time. In this case, when the predetermined value in the latch circuit 12 is set to be a counting value corresponding to time taken for the portable transceiver 1 to twice transmit the high frequency radio signal including the request signal, even if the portable transceiver 1 is possessed by the driver in a state where the strong noise signals are continuously received in the portable transceiver 1, supply power to the controller 5 is cut off after the high frequency radio signal including the request signal is twice transmitted from the portable transceiver 1 to the vehicle-mounted transceiver 14, and therefore, it becomes possible to avoid more consumption of the power supply contained in the portable transceiver 1.

On the other hand, if there is no electric device producing the strong noise signal, and the electromagnetic field strength of the low frequency radio signal received in the receiving antenna 7 is large as the vehicle-mounted transceiver 14 is close to the portable transceiver 1 and accordingly the discrimination signal is supplied from the signal level discriminator 4 to the controller 5, the electromagnetic field strength of the low frequency radio signal received in the step where the high frequency radio signal including the request signal is once transmitted from the portable transceiver 1 is lowered. Accordingly, the added counting value of the counter 11 counted up to that time is reset before it reaches the predetermined value of the latch circuit 12, and accordingly, the latch circuit 12 does not go into the latch state and the controllable power switch 10 is not switched off. Also, if the discrimination signal is not supplied to the controller 5 although the latch circuit 12 goes into the latch state, the latch state is reset and accordingly the controllable power switch 10 automatically returns to an on state.

Although the example that the predetermined value in the latch circuit 12 is set to the counting value corresponding to time taken for the portable transceiver 1 to twice transmit the high frequency radio signal including the request signal has been described in this embodiment, the predetermined value in the latch circuit 12 according to the present invention is not limited to the above example, but it should be understood that the predetermined value may be set to other counting values similar to the example.

In addition, although the example that the vehicle-mounted transceiver 14 transmits the transmitting signal with the normal level in the normal state (a state where a high level of signal is not received) and transmits a signal with a level lowered only once only when the vehicle-mounted transceiver 1 receives the request signal from the portable transceiver 1 has been described in this embodiment, it is not limited to this, but the signal with the level lowered step by step may be several times transmitted.

Furthermore, although the example that only the level of the transmitting signal of the vehicle-mounted transceiver 14 is lowered has been described in this embodiment, it is not limited to this, but, when the portable transceiver 1 receives the transmitting signal, considering that the portable transceiver 1 is close to the vehicle-mounted transceiver 14, a level of the request signal transmitted from the portable transceiver 1 may be also lowered to be less than a normal output level.

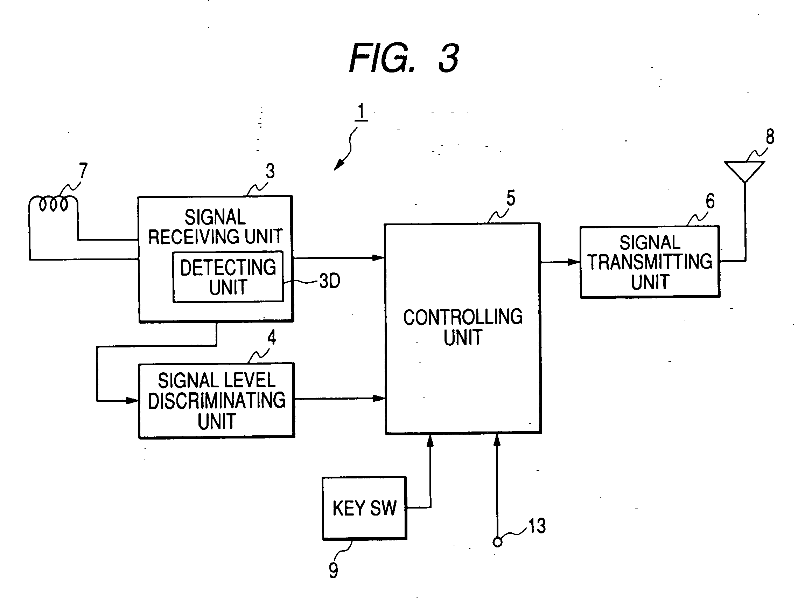

Fig. 3 is a block diagram illustrating a main configuration of a portable transceiver in the passive keyless entry device according to another embodiment of the present invention.

As shown in Fig. 3, a portable transceiver 1' according to this embodiment is similar to the portable transceiver 1 shown in Fig. 1, except that the signal level protection circuit 2, the controllable power switch 10, the counter 11, and the latch circuit 12 in Fig. 1 are omitted in Fig. 3. In Fig. 3, the same reference numerals denote the same elements as those shown in Fig.1.

In the portable transceiver 1' shown in Fig. 3, the signal receiver 3 containing the signal detector 3D has its signal input terminal connected to the receiving antenna 7, the detection signal output terminal connected to the controller 5, and the detection terminal connected to the input terminal of the signal level discriminator 4. The controller 5 has the power line (not shown) directly connected to the power terminal 13. Except for this configuration, the configuration of the portable transceiver 1' of Fig. 3 is the same as that of the portable transceiver 1 of Fig. 1, and therefore, detailed explanation thereof will be omitted for the sake of brevity.

Operation of the portable transceiver 1' is slightly different from that of the portable transceiver 1 of Fig. 1 in that the signal receiver 3 directly receives the receiving signal received in the receiving antenna 7 and some of the receiving signal is supplied to the signal level discriminator 4 via the detection terminal, and simultaneously, the other of the receiving signal is detected in the signal detector 3D and the detection signal is supplied from the detection signal output terminal to the controller 5, and in that the signal level discriminator 4 directly receives the receiving signal and the discrimination signal is outputted when the level of the receiving signal is above the internal threshold value. Except for this operation, the operation of the portable transceiver 1' of Fig. 3 is the same as that of the portable transceiver 1 of Fig. 1, and therefore, detailed explanation thereof will be omitted for the sake of brevity.

## Claims

1. A passive keyless entry device comprising a vehicle-mounted transceiver and a portable transceiver, which is adapted to operate vehicle-mounted devices controlled by the vehicle-mounted transceiver, the vehicle-mounted transceiver transmitting a wakeup signal to the portable transceiver, the portable transceiver transmitting a command signal to control the vehicle-mounted devices in response to receipt of the wakeup signal,
wherein the portable transceiver comprises a receiving antenna for receiving the wakeup signal, a signal receiver including a signal detector for processing a signal received from the receiving antenna, a signal level discriminator for determining whether a level of the signal received from the receiving antenna exceeds an input tolerance limit of the signal detector, a controller for controlling processing of various signals, and a signal transmitter for transmitting a signal to the vehicle-mounted transceiver,
the controller transmits a request signal to the vehicle-mounted transceiver via the signal transmitter when the signal level discriminator determines that the level of the signal received from the receiving antenna exceeds the input tolerance limit of the signal detector, and the vehicle-mounted transceiver again transmits the wakeup signal to the portable transceiver, with a signal level lowered by a certain level, upon receiving the request signal.

2. The passive keyless entry device according to claim 1,
wherein the portable transceiver further comprises a level protection circuit connected between the receiving antenna and the signal receiver for limiting the level of the received signal supplied to the signal detector such that the level of the received signal does not exceed the input tolerance limit of the signal detector, and, when the level protection circuit limits the level of the received signal, a result of a determination that the level of the received signal exceeds the input tolerance limit of the signal detector is output from the signal level discriminator to the controller.

3. The passive keyless entry device according to claim 1 or 2,
wherein the portable transceiver further comprises a counter for counting a duration for which the result of the determination that the level of the received signal exceeds the input tolerance limit of the signal detector is output from the signal level discriminator to the controller, and the transmission of the request signal is stopped when a counting value of the counter exceeds a predetermined value.

4. The passive keyless entry device according to claim 3, wherein the transmission stop of the request signal is performed by a latch circuit for stopping power supply to the controller when the counting value of the counter exceeds the predetermined value.

## Patentansprüche

1. Passive schlüssellose Zugangsvorrichtung, aufweisend einen in einem Fahrzeug montierten Sende-Empfänger und einen tragbaren Sende-Empfänger, der ausgelegt ist für die Betätigung von im Fahrzeug montierten Vorrichtungen, die von dem im Fahrzeug montierten Sende-Empfänger gesteuert werden, wobei der im Fahrzeug montierte Sende-Empfänger ein Wecksignal an den tragbaren Sende-Empfänger überträgt, wobei der tragbare Sende-Empfänger ein Befehlssignal überträgt, um die im Fahrzeug montierten Vorrichtungen als Antwort auf den Erhalt des Wecksignals zu steuern,
wobei der tragbare Sende-Empfänger eine Empfangsantenne für den Empfang des Wecksignals, einen Signalempfänger, der einen Signaldetektor für die Verarbeitung eines von der Empfangsantenne empfangenen Signals umfasst, einen Signalpegel-Diskriminator für die Bestimmung, ob ein Pegel des von der Empfangsantenne empfangenen Signals eine Eingangstoleranzgrenze des Signaldetektors überschreitet, eine Steuereinrichtung für die Steuerung der Verarbeitung von verschiedenen Signalen, und einen Signalsender für die Übertragung eines Signals an den im Fahrzeug montierten Sende-Empfänger aufweist,
die Steuereinrichtung über den Signalsender ein Anforderungssignal an den im Fahrzeug montierten Sende-Empfänger überträgt, wenn der Signalpegel-Diskriminator bestimmt, dass der Pegel des von der Empfangsantenne empfangenen Signals die Eingangstoleranzgrenze des Signaldetektors überschreitet, und der im Fahrzeug montierte Sende-Empfänger nach dem Empfangen des Anforderungssignals mit einem von einem gewissen Pegel gesenkten Signalpegel wieder das Wecksignal an den tragbaren Sende-Empfänger überträgt.

2. Passive schlüssellose Zugangsvorrichtung nach Anspruch 1, wobei der tragbare Sende-Empfänger ferner eine Pegelschutzschaltung aufweist, die zwischen die Empfangsantenne und den Signalempfänger geschaltet ist für eine derartige Begrenzung des Pegels des dem Signaldetektor zugeführten empfangenen Signals, dass der Pegel des empfangenen Signals die Eingangstoleranzgrenze des Signaldetektors nicht überschreitet und, wenn die Pegelschutzschaltung den Pegel des empfangenen Signals begrenzt, ein Ergebnis einer Bestimmung, dass der Pegel des empfangenen Signals die Eingangstoleranzgrenze des Signaldetektors überschreitet, von dem Signalpegel-Diskriminator an die Steuereinrichtung ausgegeben wird.

3. Passive schlüssellose Zugangsvorrichtung nach Anspruch 1 oder 2,
wobei der tragbare Sende-Empfänger ferner einen Zähler für das Zählen einer Dauer aufweist, für die das Ergebnis der Bestimmung, dass der Pegel des empfangenen Signals die Eingangstoleranzgrenze des Signaldetektors überschreitet, von dem Signalpegel-Diskriminator an die Steuereinrichtung ausgegeben wird und die Übertragung des Anforderungsignals gestoppt wird, wenn ein Zählwert des Zählers einen vorherbestimmten Wert überschreitet.

4. Passive schlüssellose Zugangsvorrichtung nach Anspruch 3, wobei der Übertragungsstop des Anforderungssignals von einer Verriegelungsschaltung für das Stoppen der Energieversorgung an die Steuereinrichtung ausgeführt wird, wenn der Zählwert des Zählers den vorherbestimmten Wert übersteigt.

## Revendications

1. Dispositif passif d'accès sans clef comprenant un émetteur-récepteur monté sur un véhicule et un émetteur-récepteur portatif, qui est adapté pour faire fonctionner des dispositifs montés dans le véhicule, commandés par l'émetteur-récepteur du véhicule, l'émetteur-récepteur du véhicule transmettant un signal de réveil à l'émetteur-récepteur portatif, l'émetteur-récepteur portatif émettant un signal d'instruction pour commander les dispositifs montés dans le véhicule en réponse à la réception du signal de réveil,
dans lequel l'émetteur-récepteur portatif comprend une antenne de réception pour recevoir le signal de réveil, un récepteur de signal incluant un détecteur de signal pour traiter un signal reçu par l'antenne de réception, un discriminateur de niveau de signal pour déterminer si un niveau du signal reçu par l'antenne de réception dépasse une limite de tolérance d'entrée du détecteur de signal, un dispositif de commande pour gérer le traitement de divers signaux, et un émetteur de signal pour transmettre un signal à l'émetteur-récepteur du véhicule,
le dispositif de commande transmet un signal de requête à l'émetteur-récepteur du véhicule via l'émetteur de signal lorsque le discriminateur de niveau de signal détermine que le niveau du signal reçu par l'antenne de réception dépasse la limite de tolérance d'entrée du détecteur de signal, et l'émetteur-récepteur du véhicule transmet de nouveau le signal de réveil à l'émetteur-récepteur portatif, avec un niveau de signal diminué d'une certaine quantité, lors de la réception du signal de requête.

2. Dispositif passif d'accès sans clef selon la revendication 1, dans lequel l'émetteur-récepteur portatif comprend en outre un circuit de protection de niveau connecté entre l'antenne de réception et le récepteur de signal pour limiter le niveau du signal reçu fourni au détecteur de signal, de sorte que le niveau du signal reçu ne dépasse pas la limite de tolérance d'entrée du détecteur de signal, et, quand le circuit de protection de niveau limite le niveau du signal reçu, un résultat d'une détermination que le niveau du signal reçu dépasse la limite de tolérance d'entrée du détecteur de signal est transmis par le discriminateur de niveau de signal au dispositif de commande.

3. Dispositif passif d'accès sans clef selon la revendication 1 ou 2, dans lequel l'émetteur-récepteur portatif comprend en outre un compteur pour mesurer la durée pendant laquelle le résultat de la détermination que le niveau du signal reçu dépasse la limite de tolérance d'entrée du détecteur de signal est transmis par le discriminateur de niveau de signal au dispositif de commande, et la transmission du signal de requête est arrêtée lorsque la valeur de comptage du compteur dépasse une valeur prédéterminée.

4. Dispositif passif d'accès sans clef selon la revendication 3, dans lequel l'arrêt de transmission du signal de requête est exécuté par un circuit à verrouillage pour couper l'alimentation électrique du dispositif de commande lorsque la valeur de comptage du compteur dépasse la valeur prédéterminée.
